# EUROPÄISCHE PATENTANMELDUNG

(11) **EP 4 786 342 A1**
(43) Veröffentlichungstag der Anmeldung: **05.08.2026**
(21) Anmeldenummer: 25155254.3
(22) Anmeldetag: 31.01.2025
(51) Int. Cl.: B64G 1/40, F02K 9/60

(54) **SEPARATIONSVORRICHTUNG FÜR KRYOGENE TREIBSTOFFTANKS VON RAKETENSTUFEN**

(71) Anmelder: ArianeGroup GmbH, 82024 Taufkirchen (DE)
(72) Erfinder: Behruzi, Kei-Philipp, 28199 Bremen (DE)
(74) Vertreter: Marschall, Stefan

(57) **Zusammenfassung**

Offenbart ist eine Separationsvorrichtung für einen kryogenen Treibstofftank einer Raketenstufe, indem ein zum Kleintriebwerk führender Nebenstrom baulich von einem Hauptstrom zu einem Haupttriebwerk getrennt ist, wobei im Einlassbereich des Nebenstromes eine fächerförmige Innenstruktur angeordnet ist, die die kryogene Flüssigkeit durchströmen muss, um zum Kleintriebwerk zu gelangen und die derart ausgeführt ist, dass sie sich zum einen in Schwerelosigkeit bzw. bei nur geringer Beschleunigung mit Flüssigkeit füllt als auch während des Betriebes des Kleintriebwerks unter Beschleunigung, sowie ein Treibstofftank für kryogene Treibstoffe.

## Beschreibung

Die Erfindung betrifft eine Separationsvorrichtung zur Anordnung in einem kryogenen Treibstofftank einer Raketenstufe und einen Treibstofftank.

Bei einem Treibstofftank, der zur Lagerung flüssiger kryogener Treibstoffe in Raketenstufen verwendet wird, stellt das Einsaugen von Gasblasen während des Orbitalbetriebs ein Problem dar. Das für den Orbitalbetrieb vorgesehene kryogene Triebwerk kann durch eingesaugte Gasblasen überhitzen und zerstört werden. Das Orbitaltriebwerk sorgt bei Raketenstufen dafür, dass in den durch das Haupttriebwerk nicht angetriebenen Phasen die Flüssigkeit am Tankauslass verbleibt, so dass eine Wiederzündung des Haupttriebwerks erfolgen kann. Fällt das Orbitaltriebwerk aus, so kann das Haupttriebwerk nicht korrekt zünden.

Die Wiederzündung von Raketenstufen, die mit kryogenen Treibstoffen, zum Beispiel flüssigem Wasserstoff und Sauerstoff betrieben werden, wird gängig mittels Kaltgas durch Ablassen des kalten Druckgases aus den kryogenen Tanks über ein System aus Kontrolldüsen eine Vorbeschleunigung erzeugt. Diese Vorbeschleunigung sorgt dafür, dass sich der Treibstoff am Tankauslass sammelt und so eine Wiederzündung nach einer ballistischen Flugphase möglich wird. Nachteilig wirkt sich dabei aus, dass eine ausreichende Menge Treibgas (Helium) vorhanden sein muss, um den Tankdruck im Betriebsbereich des Triebwerks zu halten.

Alternativ zu einer Vorbeschleunigung mit Kaltgas kann auch ein Kleintriebwerk verwendet werden, welches die kryogenen Flüssigkeiten direkt verbrennt, mit dem Ziel die Menge an benötigtem Helium zu reduzieren und die Vorbeschleunigung gegenüber dem Betrieb mit Kaltgas zu erhöhen. Dazu ist es aber notwendig eine begrenzte Menge an Treibstoff stabil am Einlass des Kleintriebwerks zu positionieren, um den Betrieb dieses Orbitaltriebwerks zu ermöglichen.

Um den Treibstoff stabil gegen Störbeschleunigungen zu halten, sind bei Satelliten mit lagerfähigen, nicht kryogenen Treibstoffen fächerförmige Strukturen bekannt, die im Auslassbereich eines Treibstofftanks angeordnet sind und Kapillarkräfte der Treibstoffe ausnutzen. Eine solche Struktur ist in dem europäischen Patent EP 2 768 731 B1 gezeigt. Da Raketentriebwerke einen hohen Treibstoffbedarf bei hohen Massenströmen aufweisen, gelten diese fächerförmigen Strukturen zur Anordnung in einem Treibstofftanks einer Raketenstufe als ungeeignet.

Aufgabe der Erfindung ist es, eine Separationsvorrichtung zur Anordnung in einem kryogenen Treibstofftank einer Raketenstufe zu schaffen, die das Eindringen von Gas in eine Flüssigkeitsleitung bei Schwerelosigkeit oder bei geringerer Schwerkraft verhindert und den Betrieb eines Haupttriebwerks ermöglicht. Darüber hinaus ist es Aufgabe der Erfindung, einen Treibstofftank für kryogene Treibstoffe zu schaffen, der einen flexiblen und robusten Betrieb ermöglicht.

Diese Aufgabe wird gelöst durch eine Separationsvorrichtung mit den Merkmalen des Patentanspruchs 1 und durch einen Treibstofftank mit den Merkmalen des Patentanspruchs 10.

Eine erfindungsgemäße Separationsvorrichtung zur Anordnung in einem kryogenen Treibstofftank einer Raketenstufe für kryogene Flüssigkeitstreibstoffe hat einen Grundkörper und zumindest einen Flüssigkeitssammler. Der Grundkörper weist zumindest einen ersten Bereich auf, der in Fluidverbindung mit einer ersten Auslassleitung des Treibstofftanks bringbar ist. Zudem hat der Grundkörper zumindest einen zweiten Bereich, der in Fluidverbindung mit einer zweiten Auslassleitung des Treibstofftanks bringbar ist. Der zumindest eine Flüssigkeitssammler ist in dem zweiten Bereich angeordnet. Er hat eine Eingangsöffnung zur Aufnahme von kryogenem Treibstoff aus dem Tankinnenraum und eine Ausgangsöffnung zur Abgabe des aufgenommenen Treibstoffs in Richtung der zweiten Auslassleitung. Der Flüssigkeitssammler hat eine Innenstruktur, die derart gestaltet ist, dass der Treibstoff basierend auf Kapillarkräften in den Flüssigkeitssammler eindringt. Bevorzugterweise ist die erste Auslassleitung bzw. Flüssigkeitsleitung mit einem Haupttriebwerk der Raketenstufe und die zweite Auslassleitung bzw. Flüssigkeitsleitung mit einem Nebentriebwerk (Kleintriebwerk bzw. Orbitaltriebwerk) verbunden.

Die vorliegende Erfindung verhindert das Eindringen von Gasblasen durch einen dem Orbitaltriebwerk vorgelagerten Fächer, der durch Ausnutzung der kapillaren Eigenschaften der Flüssigkeiten das Eindringen von Gasblasen blockiert, indem vor dem Triebwerkseinlass ein Flüssigkeitspuffer in einem Fächer kapillar gehalten wird.

Die kapillaren Kräfte bewirken, dass sich der kryogene Treibstoff, zum Beispiel flüssiger Sauerstoff, in der ballistischen Flugphase oder in Flugphasen geringer Beschleunigung in der Innenstruktur sammelt und dann während der Brenndauer des Orbitaltriebwerks zur Verfügung steht. Die Innenstruktur des Flüssigkeitssammlers entleert sich während des Triebwerkbetriebs, wenn kein Treibstoff aus dem Tank am Flüssigkeitssammler angelagert ist. Ist der Treibstoff aus dem Tank am Flüssigkeitssammler wieder angelagert, so füllt sich die Innenstruktur des Flüssigkeitssammlers im Zustand der Schwerelosigkeit oder bei geringer Beschleunigung erneut mit dem kryogenen Treibstoff aus dem Treibstofftank, auch bei laufendem Orbitaltriebwerk.

Die Separationsvorrichtung ist so ausgelegt, dass sich der Flüssigkeitssammler nach dem Abschalten des Haupttriebwerks auch unter den Bedingungen geringer Beschleunigung mit Flüssigkeit füllt. Dabei fließt während des Füllvorgangs zeitgleich ein gewisser Flüssigkeitsanteil durch den Flüssigkeitssammler zum Betrieb des Orbitaltriebwerks. Die Beschleunigung durch das Orbitaltriebwerk sorgt dafür, dass der Treibstoff am Tankauslass verbleibt und eine erneute Zündung des Haupttriebwerks jederzeit erfolgen kann. Das Orbitaltriebwerk (Kleintriebwerk) wird quasi zur Vorkonditionierung des Treibstoffs für das Haupttriebwerk verwendet.

Mit anderen Worten, die vorliegende Erfindung löst diese Aufgabe, indem der zum Kleintriebwerk führende Nebenstrom durch Trennwände von dem Hauptstrom getrennt ist. Im Einlassbereich des Nebenstromes ist eine fächerförmige Innenstruktur angeordnet, die die Flüssigkeit durchströmen muss, um zum Kleintriebwerk zu gelangen. Dabei ist die Innenstruktur so gestaltet, dass sie sich auch während des Betriebes des Kleintriebwerks unter Beschleunigung füllt.

Die Separationsvorrichtung kann als Innenstruktur eine Vielzahl von Trennblechen aufweisen, deren jeweiliger Seitenabstand sich von der Eingangsöffnung in Richtung der Ausgangsöffnung verjüngt. Die Trennbleche sind quasi radial angeordnet und überspannen dabei einen Kreisabschnitt (Bogensegment). Radial von außen betrachtet laufen die Trennbleche radial nach innen aufeinander zu. Über die Anzahl der Trennbleche lassen sich die auf den Treibstoff wirkenden kapillaren Kräfte individuell an das jeweilige Nebentriebwerk und die auftretenden Beschleunigungen einstellen.

Die Trennbleche können insbesondere in einem fluiddichten Gehäuse angeordnet sein, das über die Eingangsöffnung und die Ausgangsöffnung mit seiner Umgebung in Fluidverbindung steht. Durch diese Maßnahme werden Leckageströme durch das Gehäuse verhindert.

In Strömungsrichtung des in die Innenstruktur eindringenden Treibstoffes ist die Eingangsöffnung umfangsseitig radial außen und die Ausgangsöffnung radial innen axial in einem Gehäuseboden angeordnet. Dadurch, dass die Eingangsöffnung nicht deckelseitig, sondern vorderseitig angeordnet ist, wird das Einsaugen von heißen Treibgasen in die Innenstruktur wirkungsvoll verhindert. Durch die bodenseitige Ausgangsöffnung wird der gesammelte Treibstoff ebenfalls vom heißen Treibgas im Tankinnenraum ferngehalten.

Um jedes Trennblech bzw. deren Zwischenräume nutzen zu können ist es vorteilhaft, wenn sich die Eingangsöffnung und die Ausgangsöffnung jeweils über alle Trennbleche und somit über alle Zwischenräume erstrecken. Die Breite der Zwischenräume wird von den Seitenabständen bestimmt. Die Ausgangsöffnung kann beispielsweise sichelförmig sein.

Die Aufnahmefähigkeit der Innenstruktur bzw. die Kapillarwirkung lässt sich optimieren, wenn die Trennbleche zu einer Gehäuserückwand einen Abstand haben, der maximal ihrem minimalen Seitenabstand ist.

Um zu verhindern, dass sich Gas in den Zwischenräumen der Trennbleche sammelt, können diese oben und/oder unten zumindest jeweils eine Lochreihe aufweisen. Die Trennbleche können also in ihrem oberen Randbereich und in ihrem unteren Randbereich perforiert sein. Der Abstand der einzelnen Löcher einer Reihe zueinander hängt vom Seitenabstand der Trennbleche ab. Das heißt, radial innen haben die Löcher einen engen Abstand voneinander und radial außen einen großen Abstand voneinander. Wenn die Trennbleche im Bereich der Eingangsöffnung ebenfalls vorderseitig eingefasst sind, können in dieser oberen Einfassung und unteren Einfassung ebenfalls Löcher zum Abführen von Gas aus den Zwischenräumen ausgebildet sein.

Um zu verhindern, dass das Haupttriebwerk beim Betrieb auch den in der Innenstruktur gesammelten Treibstoff verwendet, ist ein System installiert, das dazu eingerichtet ist, dass bei Entnahme von Treibstoff über die erste Auslassleitung eine Restmengen an Treibstoff in der Innenstruktur verbleibt, um so ein Zünden des Orbitaltriebwerks jederzeit zu ermöglichen.

Bevorzugterweise ist eine Hitzeabschirmung zum Abschirmen des Flüssigkeitssammlers vor heißen Treibgasen im Tankinnenraum vorgesehen.

Ein erfindungsgemäßer kryogener Treibstofftank für eine Raketenstufe weist eine erfindungsgemäße Separationsvorrichtung auf und ermöglicht hierdurch einen flexiblen und robusten Betrieb eines Haupttriebwerks.

Sonstige vorteilhafte Ausführungsformen der Erfindung sind Gegenstand weiterer Unteransprüche.

Im Folgenden wird ein bevorzugtes Ausführungsbeispiel der Erfindung anhand der Figur näher erläutert. Es zeigen
- Figur 1: einen Längsschnitt durch einen unteren Teil eines erfindungsgemäßen Treibstofftanks mit einer im Bereich des Tankbodens positionierten erfindungsgemäßer Separationsvorrichtung,
- Figur 2: die Separationsvorrichtung in perspektivischer Einzeldarstellung
- Figur 3: eine perspektivische Darstellung eines erfindungsgemäßen Flüssigkeitssammlers der Separationsvorrichtung in Draufsicht,
- Figur 4: eine perspektivische Darstellung des Flüssigkeitssammlers in Sicht von unten, und
- Figur 5: einen Schnitt durch den Flüssigkeitssammler.

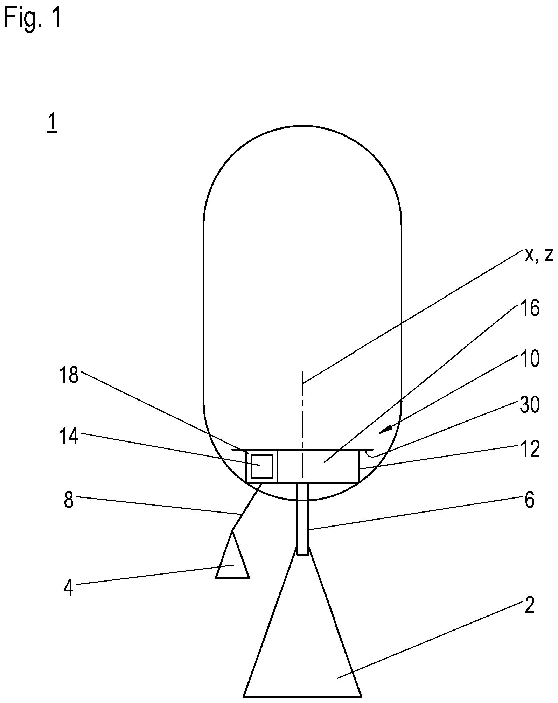

In Figur 1 ist ein Längsschnitt durch einen erfindungsgemäßen Treibstofftank 1 einer Raketenstufe gezeigt. Im Tankinnenraum wird kryogener Triebstoff wie flüssiger Sauerstoff und Helium gelagert. Der Treibstoff dient zum Betreiben eines Haupttriebwerks 2 und eines Nebentriebwerks, beispielsweise ein Orbitaltriebwerk. Das Haupttriebwerk 2 liefert den Schub, der zum Vortrieb der Raketenstufe notwendig ist. Das Orbitaltriebwerk 4 sorgt dafür, dass in den durch das Haupttriebwerk 2 nicht angetriebenen Phasen, in denen keine Schwerkraft oder nur eine geringe Beschleunigung auf die Raketenstufe wirkt, die Flüssigkeit am Tankauslass für das Haupttriebwerk 4 verbleibt, so dass eine Wiederzündung des Haupttriebwerks 4 erfolgen kann.

Zum Zuführen des Treibstoffs zu den Triebwerken 2, 4, weist der Treibstofftank 1 zwei Auslassleitungen bzw. Flüssigkeitsleitungen 6, 8 auf, von denen sich eine zum Haupttriebwerk 2 (erste Auslassleitung 6) und eine zum Orbitaltriebwerk 4 (zweite Auslassleitung 8) erstreckt.

Im Bodenbereich des Treibstofftanks 1 ist im Tankinnenraum eine erfindungsgemäße Separationsvorrichtung 10 angeordnet. Die Separationsvorrichtung 10 hat einen Grundkörper 12 und einen Flüssigkeitssammler 14.

Der Grundkörper 12 ist in einen ersten Bereich 16 und in zumindest einen zweiten Bereich 18 unterteilt. Der erste Bereich 16 stellt eine Fluidverbindung mit der ersten Auslassleitung 6 her, so dass der Treibstoff aus dem Tankinnenraum entnommen und dem Haupttriebwerk 2 zugeführt werden kann. Der zweite Bereich 18 stellt eine Fluidverbindung mit der zweiten Auslassleitung 6 her, so dass der Treibstoff aus dem Tankinnenraum entnommen und dem Nebentriebwerk 4 zugeführt werden kann. Der Flüssigkeitssammler 14 ist in dem zweiten Bereich 18 angeordnet und bewirkt, dass der flüssige Treibstoff basierend auf Kapillarkräften und somit insbesondere bei Schwerelosigkeit oder bei nur geringer Beschleunigung in den Flüssigkeitssammler 14 eindringt und sich dort ansammelt. Eine detaillierte Beschreibung der Separationsvorrichtung 10 und insbesondere des Flüssigkeitssammlers 14 erfolgt in den folgenden Figuren.

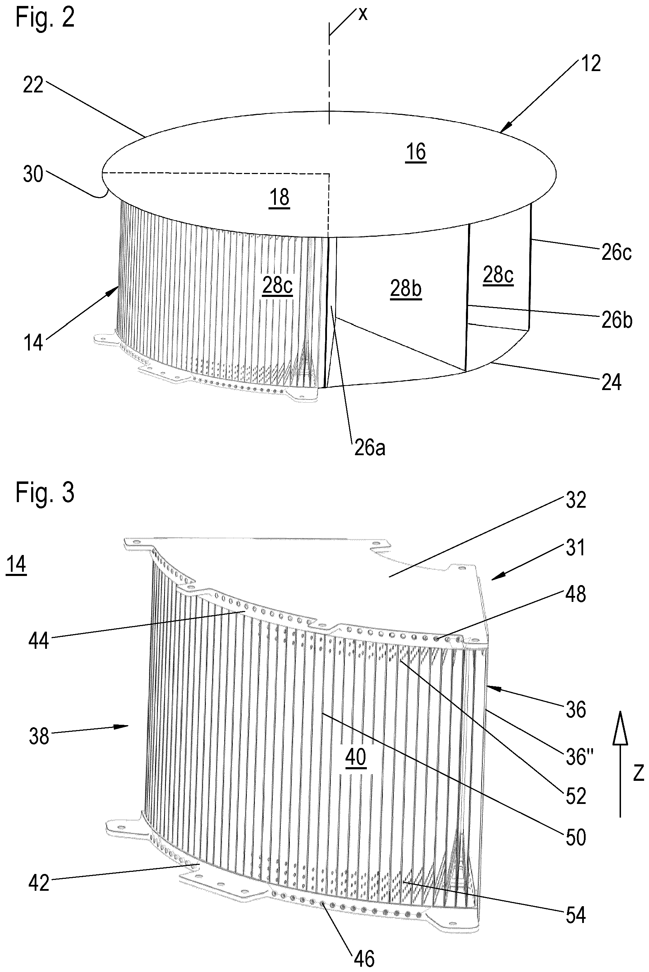

Figur 2 zeigt die Separationsvorrichtung 10 mit dem Grundkörper 12 und dem eingesetzten Flüssigkeitssammler 14.

Der Grundkörper 12 hat eine kreisrunde Deckelscheibe 22 und eine kreisrunde Bodenscheibe 24, die axial und parallel zueinander ausgerichtet und über eine Vielzahl von Seitenwänden 26a, b, c, axial voneinander beabstandet sind. Die Deckelscheibe 22 hat einen größeren Durchmesser als die Bodenscheibe 24 und wirkt als Hitzeabschirmung für den sich in den Flüssigkeitssammler 14 angesammelten flüssigen Treibstoff gegenüber heißen Treibgasen im Tankinnenraum.

Die Seitenwände 26a, b, c verlaufen in Umfangsrichtung gleichmäßig beabstandet radial zur Hochachse bzw. Hauptache X, so dass sich eine Vielzahl von gleichgroßen kreissegmentförmigen Kammern 28a, 28b, 28c ergeben. Die Seitenwände 26a, b, c sind blechartig und dichten die Kammern 28a, b, c einzeln gegeneinander ab.

Einige Kammern 28a, b, c bilden den ersten Bereich 16 und die anderen Kammern bilden den zweiten Bereich 18. In dem hier gezeigten Beispiel umspannt die Kammer 28a 90° und bildet den zweiten Bereich 18 und die übrigen Kammern 28b, c, bilden den ersten Bereich 16. Selbstverständlich sind neben kreissegmentförmigen Geometrien auch andere Kammergeometrien und eine andere Anzahl von Kammern 28a, b, c möglich. Wesentlich ist, dass zumindest zwei Kammern 28a, b, c vorgesehen sind, um zumindest zwei voneinander abgetrennte Bereiche 16, 18 zu schaffen.

Die Kammern 28a, b, c werden von der Deckelscheibe 22 und der Bodenscheibe 24 axial nach oben und nach unten abgedichtet. Umfangsseitig sind die Kammern 28a, b, c radial außen vollständig geöffnet.

In der Bodenscheibe 24 sind zwei nicht gezeigte Auslassöffnungen eingebracht, über die der Treibstoff aus dem ersten Bereich 16 (Kammern 28b, c) der ersten Auslassleitung 6 (Haupttriebwerk 2) und aus dem zweiten Bereich 18 (Kammer 28a) der zweiten Auslassleitung 8 (Orbitaltriebwerk 4) zugeführt werden kann.

Der Flüssigkeitssammler 14 ist vollständig in der Kammer 28a angeordnet. Seine radiale Erstreckung entspricht dem Radius der Bodenscheibe 24, so dass die Deckelscheibe 22 radial außen einen dachartigen Vorsprung 30 bildet, der die Rückhaltung von heißen Treibgasen begünstigt (siehe auch Figur 1).

Mit Bezug zu den Figuren 3, 4 und 5 wird der Flüssigkeitssammler 14 näher erläutert.

Der Flüssigkeitssammler 14 hat ein Gehäuse 31, das korrespondierend zu der ihn aufnehmenden Kammer 28a ist. Entsprechend hat das Gehäuse 32 eine quasi dreieckige Form und umspannt einen Winkel von 90°. Das Gehäuse 32 hat einen fluiddichten plattenartigen Gehäusedach 32, einen fluiddichten plattenartigen Gehäuseboden 34 und einer fluiddichten Gehäusewandung 36.

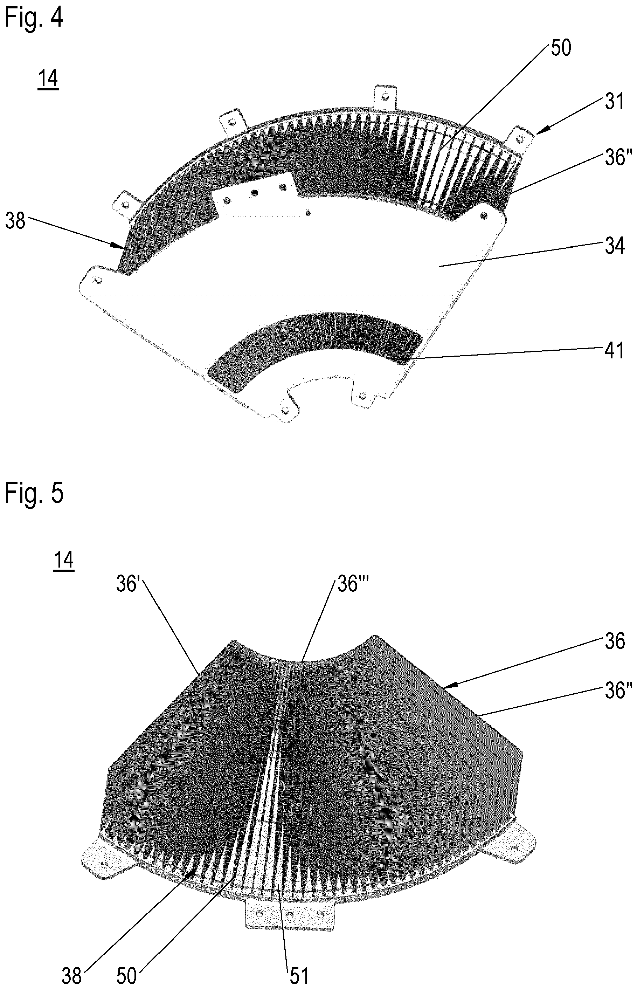

Über die Gehäusewandung 36 sind das Gehäusedach 32 und der Gehäuseboden 34 in Hochrichtung z voneinander beabstandet und gleichzeitig miteinander verbunden. Die Gehäusewandung 36 erstreckt sich seitlich des Gehäusedaches 32 und des Gehäusebodens 34 sowie radial innen derselben. Somit bildet die Gehäusewand 36 zwei Gehäuseseiten 36', 36'' und einen Gehäuserücken 36‴ (siehe Figur 4 und 5).

Die Gehäusewandung 36 ist insbesondere ein gebogener Blechstreifen. Das Gehäusedach 32 und der Gehäuseboden 34 sind vornehmlich plane Blechplatten.

Das Gehäusedach 32, der Gehäuseboden 34 und die Gehäusewandung 36 begrenzen einen Aufnahmeraum zur Anordnung einer fächerartigen Innenstruktur 38. Der Aufnahmeraum ist radial außen geöffnet. Insbesondere erstreckt sich eine Eingangsöffnung 40 zur Aufnahme des flüssigen Treibstoffes in Hochrichtung z von einem radial äußeren Rand 42 des Gehäusebodens 34 bis zu einem radial äußeren Rand 44 des Gehäusedachse 32 sowie in Umfangsrichtung (Querrichtung) von der einen Gehäuseseite 36'zur anderen Gehäuseseite 36''.

Die Ränder 42, 44 können, wie hier dargestellt, nach innen (aufeinander zu) umgebogen sein und eine obere und eine unter eingangsöffnungsseitige Einfassung für die Innenstruktur 38 darstellen. Zum Abführen von Gas aus dem Aufnahmeraum können in die Ränder 42, 44 eine Vielzahl von Löchern 46, 48 eingebracht sein.

Die fächerartige Innenstruktur 38 weist eine Vielzahl von hochkant, radial nebeneinander angeordneten Trennblechen 50 auf. Die Trennbleche 50 erstrecken sich von dem Gehäuseboden 34 zum Gehäusedach 32 und unterteilen den Aufnahmeraum in eine Vielzahl von gleichgroßen Zwischenräumen 51 (siehe Figur 5). Radial verlaufen sie von den radial äußeren Rändern 42, 44 in Richtung der Gehäuserückwand 36''', sind von dieser jedoch radial beabstandet.

Aufgrund der radialen Anordnung der Trennbleche 50 verjüngen sich die Zwischenräume 51 von radial außen (Eingangsöffnung 40) nach radial innen (Ausgangsöffnung 41), wodurch sich basierend auf Kapillarkräften die Zwischenräume 51 mit Flüssigkeit aus dem Treibstofftank 1 füllen.

Der radiale Abstand der Trennbleche 50 zur Gehäuserückwand 36‴ richtet sich nach deren Seitenabstand. Der minimale Abstand der Trennbleche 50 zur Gehäuserückwand 36‴ ist so bemessen ist, dass er den minimalen Seitenabstand der Trennbleche 50 nicht überschreitet.

Wie in Figur 3 beziffert, können die Trennbleche 50 zum Abführen von Gas aus den Zwischenräumen 51 an ihren oberen Rändern und an ihren unteren Rändern mit zumindest jeweils einer Lochreihe 52, 54 versehen sein, so dass obere und untere Querverbindung zwischen den Zwischenräumen 51 geschaffen werden. Hier sind beispielsweise jeweils drei parallele Lochreihen 52, 54 vorgesehen. Der Abstand der Löcher in jeder Lochreihe 52, 54 richtet sich nach dem lokalen Seitenabstand zum benachbarten Trennblech 50. Der Lochabstand beträgt zum Beispiel den 1.3-fachen Abstand zum benachbarten Trennblech 50, nimmt also radial von außen (Eingangsöffnung 40) nach innen betrachtet (Ausgangsöffnung 41) ab bzw. nimmt von der Ausgangsöffnung 41 zur Eingangsöffnung 40 korrespondierend mit den sich verbreiternden Zwischenräumen 51 zu.

Aufgrund der Größe der Eingangsöffnung 40 erstreckt sich diese über sämtliche Trennbleche 50 bzw. Zwischenräume 51. Die Ausgangsöffnung 41 ist radial innen im Gehäuseboden 34 eingebracht. Sie erstreckt sich wie die Eingangsöffnung 40 über sämtliche Trennbleche 50 bzw. deren Zwischenräume 51 und hat hier eine sichelförmige Gestalt (Figur 5). Die Flüssigkeit aus dem Treibstoff wird somit umfangsseitig eingesammelt und axial wieder abgegeben. Die Ausgangsöffnung 41 ist derart angeordnet, dass sie im in das Gehäuse 32 eingesetzten fluchtend zur Auslassöffnung (nicht gezeigt) für die zweite Auslassleitung 8 (Auslassleitung des Nebentriebwerks 4) angeordnet ist.

Die kapillaren Kräfte bewirken, dass sich der kryogene Treibstoff, zum Beispiel flüssiger Sauerstoff, in der ballistischen Flugphase in der Innenstruktur 38 sammelt und dann während der Brenndauer des Orbitaltriebwerks 4 zur Verfügung steht. Die Innenstruktur 38 des Flüssigkeitssammlers 14 entleert sich während des Triebwerkbetriebs, wenn keine Flüssigkeit aus dem Treibstofftank 1 um den Flüssigkeitssammler 14 angelagert ist. Ist Treibstofftank 1 um den Flüssigkeitssammler 14 angelagert, füllt sich die Innenstruktur 38 des Flüssigkeitssammlers im Zustand geringer Beschleunigung oder Schwerelosigkeit erneut mit dem kryogenen Treibstoff aus dem Treibstofftank 1 basierend auf den auf den Treibstoff wirkenden kapillaren Kräften. Dabei ist ein System installiert, das dazu eingerichtet ist, bei Entnahme von Treibstoff über die erste Auslassleitung 6 eine Restmengen an Treibstoff in der Innenstruktur 38 verbleibt, so dass der Flüssigkeitssammler 14 beim Betrieb des Haupttriebwerks 2 nicht leergesaugt wird.

Offenbart ist eine Separationsvorrichtung für einen kryogenen Treibstofftank einer Raketenstufe, indem ein zum Kleintriebwerk führender Nebenstrom baulich von einem Hauptstrom zu einem Haupttriebwerk getrennt ist, wobei im Einlassbereich des Nebenstromes eine fächerförmige Innenstruktur angeordnet ist, die die kryogene Flüssigkeit durchströmen muss, um zum Kleintriebwerk zu gelangen und die derart ausgeführt ist, dass sie sich zum einen in Schwerelosigkeit bzw. bei nur geringer Beschleunigung mit Flüssigkeit füllt als auch während des Betriebes des Kleintriebwerks unter Beschleunigung, sowie ein Treibstofftank für kryogene Treibstoffe.

### Bezugszeichenliste

- 1: Treibstofftank
- 2: Haupttriebwerk
- 4: Nebentriebwerk
- 6: erste Auslassleitung
- 8: zweite Auslassleitung
- 10: Separationsvorrichtung
- 12: Grundkörper
- 14: Flüssigkeitssammler
- 16: ersten Bereich
- 18: zweiten Bereich
- 22: Deckelscheibe, Funktion Hitzeabschirmung
- 24: Bodenscheibe
- 26a, b, c: Seitenwand
- 28a, b, c: Kammer
- 30: Vorsprung
- 31: Gehäuse
- 32: Gehäusedach
- 34: Gehäuseboden
- 36: Gehäusewandung
- 36',36'': Gehäuseseite
- 36‴: Gehäuserücken
- 38: Innenstruktur
- 40: Eingangsöffnung
- 41: Ausgangsöffnung
- 42: radial äußerer Rand (Gehäuseboden)
- 44: radial äußerer Rand (Gehäusedach)
- 46: Loch im oberen Rand
- 48: Loch im unteren Rand
- 50: Trennblech
- 51: Zwischenraum
- 52: obere Lochreihe (Trennblech)
- 54: unter Lochreihe (Trennblech)
- z: Hauptrichtung (Separationsvorrichtung)
- x: Hochrichtung (Flüssigkeitssammler)

## Patentansprüche

1. Separationsvorrichtung (1) zur Anordnung in einem Treibstofftank (2) einer Raketenstufe für kryogene Flüssigkeitstreibstoffe, mit:
• einem Grundkörper (12), der
o zumindest einen ersten Bereich (16), der in Fluidverbindung mit einer ersten Auslassleitung (6) des Treibstofftanks (2) bringbar ist, und
o zumindest einem zweiten Bereich (18), der in Fluidverbindung mit einer zweiten Auslassleitung (8) des Treibstofftanks (2) bringbar ist, aufweist, und mit
• zumindest einem Flüssigkeitssammler (14), der in dem zweiten Bereich (18) angeordnet ist und eine Eingangsöffnung (40) zur Aufnahme von Treibstoff aus dem Tankinnenraum und eine Ausgangsöffnung (41) zur Abgabe des aufgenommenen Treibstoffs aufweist, wobei der Flüssigkeitssammler (14) eine Innenstruktur (38) hat, die derart gestaltet ist, dass der Treibstoff basierend auf Kapillarkräften in den Flüssigkeitssammler (14) eindringt.

2. Separationsvorrichtung nach Patentanspruch 1, wobei der Flüssigkeitssammler (14) als Innenstruktur (38) eine Vielzahl von Trennblechen (50) aufweist, deren jeweiliger Seitenabstand sich von der Eingangsöffnung (40) in Richtung der Ausgangsöffnung (41) verjüngt.

3. Separationsvorrichtung nach Patentanspruch 2, wobei die Trennbleche (50) in einem fluiddichten Gehäuse (31) angeordnet sind, das über die Eingangsöffnung (40) und die Ausgangsöffnung (41) mit seiner Umgebung in Fluidverbindung steht.

4. Separationsvorrichtung nach Patentanspruch 3, wobei die Eingangsöffnung (40) umfangsseitig radial außen und die Ausgangsöffnung (41) radial innen axial in einem Gehäuseboden (34) angeordnet ist.

5. Separationsvorrichtung nach Patentanspruch 3 oder 4, wobei sich die Eingangsöffnung (40) und die Ausgangsöffnung (41) jeweils über alle Trennbleche (50) erstrecken.

6. Separationsvorrichtung nach Anspruch 5, wobei die Trennbleche (50) zu einer Gehäuserückwand einen Abstand haben, der maximal ihrem minimalen Seitenabstand ist.

7. Separationsvorrichtung nach Anspruch 5, wobei die Trennbleche (50) im Bodenbereich und/oder Deckelbereich zumindest eine Lochreihe (52, 54) haben, deren Lochabstand sich nach dem Seitenabstand der Trennbleche (50) richtet.

8. Separationsvorrichtung nach einem der vorhergehenden Patentansprüche, wobei ein System installiert ist, das dazu eingerichtet ist, bei Entnahme von Treibstoff über die erste Auslassleitung (6) eine Restmengen an Treibstoff in der Innenstruktur (38) verbleibt.

9. Separationsvorrichtung nach einem der vorhergehenden Patentansprüche, wobei eine Hitzeabschirmung (22) zum Abschirmen des Flüssigkeitssammlers vor heißen Treibgasen im Tankinnenraum vorgesehen ist.

10. Treibstofftank (1) für eine Raketenstufe mit einer Separationsvorrichtung (10) nach einem der Patentansprüche 1 bis 8.
